# EUROPÄISCHE PATENTSCHRIFT

(11) **EP 3 062 180 B1**
(45) Veröffentlichungstag und Bekanntmachung des Hinweises auf die Patenterteilung: **11.07.2018**
(21) Anmeldenummer: 15156550.4
(22) Anmeldetag: 25.02.2015
(51) Int. Cl.: G05B 19/19, G01B 21/00, G05B 19/406

(54) **VERFAHREN ZUR ÜBERPRÜFUNG DER POSITIONIERGENAUIGKEIT EINES MITTELS EINES ANTRIEBS UND EINER STEUERUNG BEZÜGLICH WENIGSTENS EINER ACHSE VERSTELLBAREN MASCHINENTEILS**
METHOD FOR VERIFYING THE POSITION ACCURACY OF A MACHINE PART WHICH CAN BE ADJUSTED RELATIVE TO AT LEAST ONE AXLE BY MEANS OF A DRIVE AND A CONTROL
PROCÉDÉ DE VÉRIFICATION DE L'EXACTITUDE DE POSITIONNEMENT D'UNE PARTIE DE MACHINE RÉGLABLE AU MOYEN D'UN ENTRAÎNEMENT ET D'UNE COMMANDE PAR RAPPORT À AU MOINS UN AXE

(43) Veröffentlichungstag der Anmeldung: 31.08.2016
(73) Patentinhaber: Siemens Aktiengesellschaft, 80333 München (DE)
(72) Erfinder: Berghold, Ricky, 91058 Erlangen (DE); Immenroth, Lars, 08056 Zwickau (DE); Pulawski, Robert, 91056 Erlangen (DE); Welker, Johannes, 92318 Neumarkt (DE)

(56) Entgegenhaltungen:
- DE-A1- 19 637 632
- US-A- 5 313 147

## Beschreibung

Verfahren zur Überprüfung der Positioniergenauigkeit eines mittels eines Antriebs und einer Steuerung bezüglich wenigstens einer Achse verstellbaren Maschinenteils.

Die Erfindung betrifft ein Verfahren zur Überprüfung der Positioniergenauigkeit eines mittels eines Antriebs und einer Steuerung bezüglich wenigstens einer Achse verstellbaren Maschinenteils, wobei das Maschinenteil lediglich bezüglich der einen Achse verstellt wird, indem die Steuerung Soll-Lagewerte des Maschinenteils in Bezug auf die eine Achse vorgibt.

Zur Überprüfung der Positioniergenauigkeit einer CNC-Werkzeugmaschine ist unter anderem der so genannte Kreisformtest bekannt. Bei dem Kreisformtest werden wenigstens zwei Achsen der Werkzeugmaschine so angesteuert, dass der Werkzeug-Nullpunkt (TCP: Tool Center Point) eine Kreisbahn beschreibt. Insbesondere werden die beiden Achsen über eine Kreisinterpolation gemeinsam verfahren. Die Kreisinterpolation erzeugt für die eine Maschinenachse ein Sinus- und für die andere ein Cosinus-Bewegungsprofil. Mittels eines Messsystems werden die realen Ist-Positionswerte des Werkzeug-Nullpunkts erfasst und in einer Kreisdarstellung grafisch dargestellt. Damit die Abweichungen der realen Kreisbahn von der ebenfalls dargestellten idealen Kreisbahn besser erkannt werden können, ist es üblich, die Abweichungen gegenüber der idealen Kreisbahn stark vergrößert darzustellen. Für die Abweichungen in Bezug auf die ideale Kreisbahn wird demnach ein anderer, insbesondere gegenüber der idealen Kreisbahn stark vergrößerter Maßstab verwendet. Mit dem Kreisformtest können mechanische und dynamische Fehler von Maschinenachsen ermittelt werden. Bei der genannten Vorgehensweise treten folgende Probleme auf:
a) Gewöhnlich kann nicht jede Maschinenachse mit jeder anderen zusammen im Kreis interpoliert werden, was die Überprüfung der Positioniergenauigkeit für solche Achsen erschwert.
b) Bei unterschiedlichen Dynamikeinstellungen in den miteinander interpolierenden Achsen dominiert der Einfluss der unterschiedlichen Achsendynamik den Kreisformtest und damit die Kreisdarstellung so stark, dass die kleineren mechanischen Konturfehler, die z.B. durch Reibung oder mechanische Lose erzeugt werden, in der Kreisdarstellung nicht mehr als Abweichungen erkennbar sind.
c) Beim Interpolieren von zwei mechanisch miteinander verkoppelten Maschinenachsen können die in den Maschinenachsen erfassten Konturfehler - durch den gegenseitigen mechanischen Einfluss - nicht immer einer der beiden Maschinenachsen eindeutig zugeordnet werden.

Die Druckschrift DE 196 37 632 A1 offenbart eine numerische Bahnsteuerung, bei der Reibungseinflüsse durch eine Stromvorsteuerung kompensiert werden. Zur Beurteilung des Bahnverhaltens wird ein üblicher Kreisformtest durchgeführt, bei dem die zu prüfenden Achsen mit sinus- und cosinus-förmigen Lagesollwerten beaufschlagt werden, die in Summe die gewünschte Kreisbahn ergeben.

Die Druckschrift US 5 313 147 A offenbart eine digitale Steuerung eines Servomotors. Zur Veranschaulichung der Funktionsweise werden Spannungsvektoren in einem Kreisdiagramm dargestellt.

Aufgabe der vorliegenden Erfindung ist es, ein Verfahren zur Überprüfung der Positioniergenauigkeit zur Verfügung zu stellen, bei dem die genannten Probleme nicht auftreten.

Diese Aufgabe wird gelöst durch ein Verfahren mit den in Patentanspruch 1 angegebenen Verfahrensschritten. Vorteilhafte Weiterbildungen sind in den abhängigen Ansprüchen angegeben.

Die Erfindung zeichnet sich dadurch aus, dass zur Überprüfung der Positioniergenauigkeit eines mittels eines Antriebs und einer Steuerung bezüglich wenigstens einer Achse verstellbaren Maschinenteils das Maschinenteil lediglich bezüglich der einen Achse verstellt wird, indem die Steuerung Soll-Lagewerte des Maschinenteils in Bezug auf die eine Achse gemäß einer Sinus-Funktion vorgibt. Eine Messeinrichtung ermittelt Ist-Lagewerte des Maschinenteils in Bezug auf die eine Achse. Diese werden in Bezug auf die eine Achse in einer Kreisdarstellung grafisch veranschaulicht.

Die Erfindung ist sowohl zur Überprüfung der Positioniergenauigkeit von Linearachsen als auch zur Überprüfung der Positioniergenauigkeit von Rundachsen geeignet. Bei der Ausführung des erfindungsgemäßen Verfahrens wird die Positioniergenauigkeit genau einer Achse einer Maschine überprüft. Selbstverständlich kann das Verfahren bei einer Maschine auch mehrfach ausgeführt werden, so dass schließlich mehrere bzw. alle Achsen der Maschine hinsichtlich ihrer Positioniergenauigkeit überprüft werden können.

Die vorgegebenen Soll-Lagewerte über der Zeit folgen einer Sinus-Funktion. Daraus resultiert bei einer Ausführungsform mit einem entlang einer Linearachse bewegbaren Maschinenteil eine Hin- und Herbewegung des Maschinenteils entlang dieser Linearachse, also eine lineare Bewegung mit periodischer Richtungsumkehr. Bei der Überprüfung der Positioniergenauigkeit einer Rundachse bewirkt die Vorgabe der Soll-Lagewerte (Soll-Winkellagen) über der Zeit gemäß einer Sinus-Funktion ein periodisches Hin- und Herschwenken des Maschinenteils um die Rundachse.

Die Verstellung des Maschinenteils bezüglich genau einer Achse sowie die Ermittlung der Ist-Lagewerte des Maschinenteils in Bezug auf genau diese eine Achse ergeben folgende Vorteile:
a) Es muss neben der betrachteten Achse für keine weitere Maschinenachse eine Interpolation durchgeführt werden, um die Konturfehler einer bestimmten Maschinenachse zu erfassen. Damit kann ein Kreisformtest für jede einzelne Maschinenachse uneingeschränkt (insbesondere unabhängig von einer zweiten Achse) durchgeführt werden.
b) Der Einfluss von Dynamikeinstellungen beeinflusst nicht mehr die Messung bzw. die Kreisdarstellung. Die Kreisdarstellung zeigt nur noch Abweichungen, die durch die mechanischen Konturfehler verursacht werden.
c) Der Einfluss mechanischer Verkopplungen zwischen zwei Maschinenachsen beeinflusst nicht mehr die Kreisdarstellung. Die Kreisdarstellung zeigt nur noch Abweichungen, die durch mechanische Fehler verursacht werden.

Zur Erzeugung der Kreisdarstellung zum Veranschaulichen der Konturfehler gibt es unterschiedliche Möglichkeiten. Eine erste Ausführungsform der Erfindung sieht vor, dass zur Erzeugung der Kreisdarstellung zu bestimmten Winkeln der Sinus-Funktion jeweils die Abweichung des Ist-Lagewertes von dem zugehörigen Soll-Lagewert aufgezeigt wird. Auch dabei wird vorteilhaft die Abweichung in einem viel größeren Maßstab als der Kreis selbst aufgetragen. Die Abweichungen sind somit stark vergrößert und somit leicht wahrnehmbar. Alle Soll-Lagewerte liegen auf dem idealen Kreis. Diese Ausführungsform hat den Vorteil, dass die Kreisdarstellung mit sehr geringem Rechenaufwand erzeugt werden kann.

Eine alternative Ausführungsform sieht vor, dass die Ist-Lagewerte für wenigstens eineinviertel Perioden der Sinus-Funktion ermittelt und gespeichert werden und die Kreisdarstellung ein Koordinatensystem mit einer ersten Achse und einer dazu orthogonalen zweiten Achse umfasst und die Ist-Lagewerte dadurch grafisch veranschaulicht werden, dass die ermittelten Ist-Lagewerte Koordinaten in Bezug auf die erste Achse darstellen und sich zu jeder Koordinate in Bezug auf die erste Achse die zugehörige Koordinate in Bezug auf die zweite Achse dadurch ergibt, dass dafür der gegenüber dem augenblicklich betrachteten Ist-Lagewert um eine Viertel-Periodendauer zurückliegende Ist-Lagewert herangezogen wird. Diese Ausführungsform hat den Vorteil, dass sie enger an den bisherigen Kreisformtest angelehnt ist als die erste Ausführungsform. Weiterhin ist es bei dieser Ausführungsform nicht erforderlich, die Sinus-Funktion während der Durchführung des Kreisformtests explizit zu berechnen. Entsprechende Werte der Sinus-Funktion könnten beispielsweise bereits vorbestimmt und lediglich in einer Lookup-Tabelle abgelegt sein. Selbstverständlich kann bei der alternativen Ausführungsform neben dem um eine Viertel-Periodendauer zurückliegenden Ist-Lagewert auch jeder bezüglich dieses Zeitpunktes um ein Vielfaches der Periode weiter zurückliegende Zeitpunkt und der damit verbundene Ist-Lagewert herangezogen werden.

Wie bei numerischen Steuerungen üblich, kann auch bei dem Kreisformtest gemäß der Erfindung nur eine endliche Anzahl an Soll-Lagewerten vorgegeben werden und diesbezüglich auch nur eine endliche Anzahl an Ist-Lagewerten ermittelt werden. Damit ist die Wahrscheinlichkeit hoch, dass es zu einem bestimmten Zeitpunkt, zu dem ein Soll-Lagewert vorgegeben und der zugehörige Ist-Lagewert ermittelt wird, keinen um exakt eine Viertel-Periodendauer zurückliegenden Soll- bzw. Ist-Lagewert gibt, da der um eine Viertel-Periodendauer zurückliegende Zeitpunkt nicht in dem vorgegebenen Zeitraster liegt, in dem Soll-Lagewerte ausgegeben bzw. Ist-Lagewerte ermittelt werden. Der um eine Viertel-Periodendauer zurückliegende Ist-Lagewert wird dann dadurch ermittelt, dass der Ist-Lagewert für den gesuchten Zeitpunkt aus wenigstens zwei um den fraglichen Zeitpunkt herum ermittelten (gemessenen) Ist-Lagewerten interpoliert wird. Alternativ könnte auch der Messwert herangezogen werden, der dem fraglichen Zeitpunkt (gegenüber dem aktuell betrachteten Zeitpunkt um eine Viertel-Periodendauer zurückliegend) am nächsten liegt. Die Interpolation führt jedoch zu genaueren Ergebnissen.

Der erfindungsgemäße Kreisformtest wird vorzugsweise für eine komplette Periode der Sinus-Funktion in der Kreisdarstellung grafisch veranschaulicht. Gegebenenfalls (je nach der gewählten Methode) ist hierfür die Durchführung des Tests für eineinviertel Perioden erforderlich. Dadurch können dem Betrachter die Abweichungen für die komplette Periode und somit für einen kompletten Kreis (360°) grafisch veranschaulicht werden.

Die Erfindung wird nachfolgend anhand von Ausführungsbeispielen näher erläutert. Es zeigen:
- FIG 1: einen Aufbau zur Durchführung des Kreisformtests gemäß dem Stand der Technik,
- FIG 2: eine Darstellung des Ergebnisses des Kreisformtests gemäß dem Stand der Technik,
- FIG 3: ein entlang einer Linearachse verfahrbares Maschinenteil,
- FIG 4: die zeitliche Position des Maschinenteils gemäß FIG 3, und
- FIG 5: die grafische Veranschaulichung der durch den erfindungsgemäßen Kreisformtest ermittelten Messwerte,
- FIG 6: ein um eine Rundachse schwenkbares Maschinenteil,
- FIG 7: die zeitliche Winkellage des Maschinenteils gemäß FIG 6 und
- FIG 8: die grafische Veranschaulichung der durch den erfindungsgemäßen Kreisformtest ermittelten Messwerte.

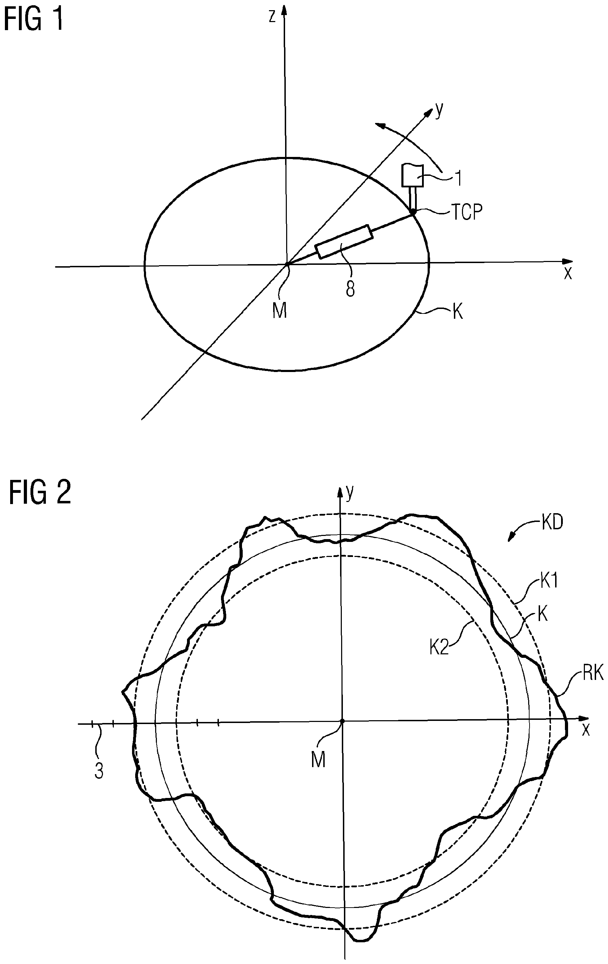

Figur 1 veranschaulicht in schematischer, stark vereinfachter Darstellung einen Aufbau zur Durchführung eines Kreisformtests gemäß dem Stand der Technik. Dabei wird mittels geeigneter Antriebe (nicht dargestellt) und einer geeigneten Steuerung (nicht dargestellt) ein Maschinenteil 1 entlang einer Kreisbahn bewegt. Hierfür werden wenigstens zwei Maschinenachsen in einer Interpolation gesteuert. An dem Maschinenteil 1 ist ein stiftförmiger Gegenstand befestigt, dessen loses Ende als TCP (Tool Center Point) bezeichnet wird. Der TCP bewegt sich in der x-y-Ebene entlang einer Kreisbahn K um den Kreismittelpunkt M. Bei der Bewegung ermittelt ein Messaufnehmer 2 abhängig von dem Winkel, den der Messaufnehmer 2 mit der x-Achse einschließt, den Ist-Abstand des TCP von dem Kreismittelpunkt M.

In Figur 2 ist das Messergebnis in einer für den Kreisformtest typischen Darstellung grafisch veranschaulicht. Dargestellt sind die Achsen x und y, die die x-y-Ebene aufspannen. Der Kreismittelpunkt M liegt im Schnittpunkt der beiden Achsen. Dargestellt ist ferner ein idealer Kreis K um den Mittelpunkt M sowie die beiden Hilfskreise K1 und K2 (strichliert dargestellt). Die von der Steuerung vorgegebenen Soll-Positionswerte liegen alle auf dem (idealen) Kreis K. Aufgetragen sind ferner Messpunkte RK (realer Kreis), die sich aus der Messung gemäß Figur 1 ergeben. Da bei hochgenauen Werkzeugmaschinen die Abweichungen der gemessenen Ist-Positionswerte von den vorgegebenen Soll-Positionswerten in Bezug auf den Kreisradius winzig klein sind, werden die Abweichungen in einem anderen, gegenüber den Achsen stark vergrößerten Maßstab dargestellt. Dies wird durch die Maßverkörperung 3 veranschaulicht. Durch die Darstellung ist nun auf einen Blick zu erkennen, unter welchem Winkel (in Bezug auf die x-Achse) die Maschine bei der Durchführung einer Kreisbewegung eine besonders hohe bzw. eine besonders niedrige Abweichung von den vorgegebenen Soll-Positionswerten hat. Der Fachmann kann sich dadurch sehr schnell einen Überblick über die Genauigkeit der Positionsregelung bzw. der Mechanik der betreffenden Maschine verschaffen.

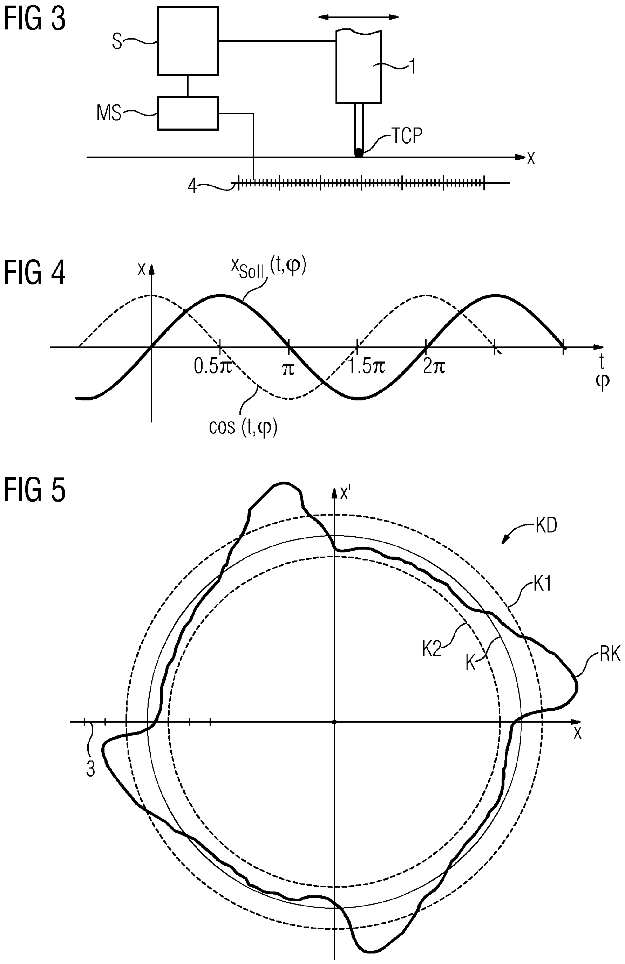

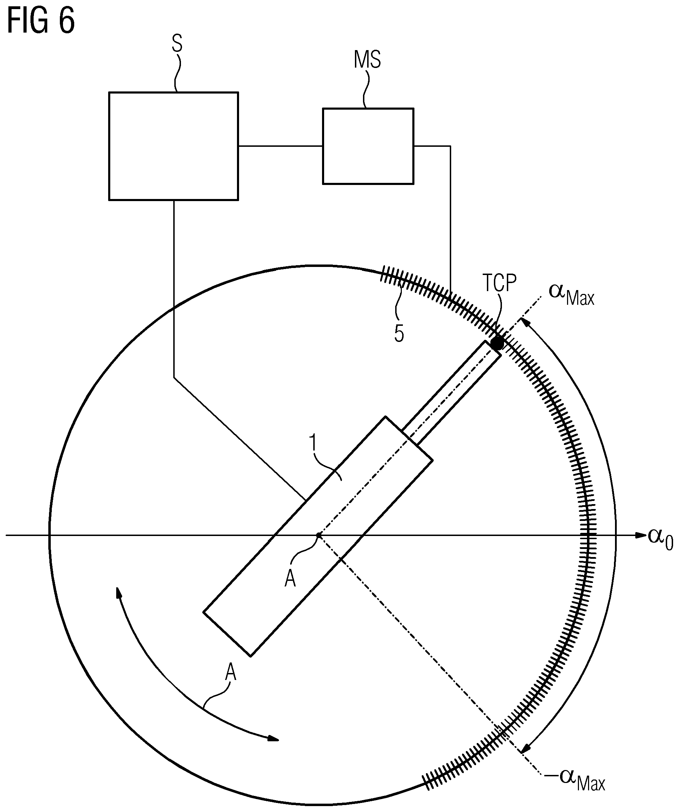

In den Figuren 3 bis 8 ist nachfolgend der modifizierte Kreisformtest gemäß der Erfindung veranschaulicht. Dabei zeigen die Figuren 3 bis 5 die Überprüfung der Positioniergenauigkeit einer Linearachse und die Figuren 6 bis 8 die Überprüfung der Positioniergenauigkeit einer Rundachse.

Figur 3 zeigt ein Maschinenteil 1, welches mittels einer Steuerung S und damit verbundenen Antrieben (nicht dargestellt) periodisch entlang der x-Achse hin und her bewegt wird. Die Steuerung S gibt hierfür die entsprechenden Soll-Lagewerte (Soll-Positionswerte) vor. Ein Messaufnehmer MS mit einer Maßverkörperung 4 misst die exakte Position des TCP bezüglich der x-Achse (Ist-Lagewerte, auch als Ist-Positionswerte bezeichnet) in Abhängigkeit von der Zeit.

In Figur 4 ist die Vorgabe der Soll-Positionswerte durch die Steuerung S grafisch veranschaulicht. Aufgetragen ist der x-Positionswert (Soll-Positionswert) in Abhängigkeit von der Zeit t bzw. in Abhängigkeit von dem Winkel ϕ bezogen auf die Periodendauer (eine Periode entspricht einem Winkel von 360°). Daraus wird ersichtlich, dass die Soll-Positionswerte x_{Soll} (t, ϕ) gemäß einer Sinus-Funktion vorgegeben werden. Daraus resultiert die periodische Hin- und Herbewegung des Maschinenteils 1 entlang der einen Linearachse (x-Achse).

Weiterhin dargestellt ist in Figur 4 die Funktion Cosinus (t) bzw. Cosinus (ϕ) (strichlierte Linie), die der Sinus-Funktion um eine Viertel-Periode vorauseilt. Bezüglich der Ausführungsform der Erfindung, bei der sich zu jeder Koordinate in Bezug auf die erste Achse (x-Achse) die zugehörige Koordinate in Bezug auf die zweite, zu der ersten Achse orthogonalen Achse (x'-Achse), dadurch ergibt, dass dafür der gegenüber dem augenblicklich betrachteten Ist-Positionswert um eine Viertel-Periodendauer zuvor ermittelte Ist-Positionswert herangezogen wird, entspricht dies einem Übergang von der Sinus-Funktion auf die Cosinus-Funktion.

Figur 5 veranschaulicht nun das Ergebnis des modifizierten Kreisformtests gemäß der Erfindung. Dabei ist die x-Achse ein erstes Mal und orthogonal dazu ein zweites Mal aufgetragen. Zur Unterscheidung wird letztere im Beispiel als "x'-Achse" bezeichnet. Weiterhin ist, wie beim herkömmlichen Kreisformtest, ein idealer Kreis K mit dem Mittelpunkt M im Schnittpunkt der beiden Achsen sowie die beiden Hilfskreise K1 und K2 (strichliert) dargestellt. Darüber hinaus ist auch hier wieder der reale Kreis RK dargestellt, aus dem die Abweichungen der gemessenen Ist-Positionswerte in Bezug auf die vorgegebenen Soll-Positionswerte hervorgehen. Ebenso sind die Abweichungen des Realen Kreises RK gegenüber dem idealen Kreis K in einem viel größeren Maßstab dargestellt als der Radius des Kreises K, veranschaulicht durch die Maßverkörperung 3. Der reale Kreis RK ergibt sich auch hier entweder dadurch, dass zu einem gemäß der Sinus-Funktion vorgegebenen x-Wert (Soll-Positionswert) der Ist-Positionswert entweder unter dem zugehörigen Winkel ϕ aufgetragen wird, oder zu jedem gemessenen x-Positionswert eine zugehörige "x'-Koordinate" berechnet und so die entsprechenden Punkte in der x-x'-Ebene ermittelt werden. Die Berechnung der x'-Koordinate erfolgt vorzugsweise dadurch, dass hierfür der um eine Viertel-Periodendauer zurückliegende Ist-Positionswert herangezogen wird. Sollte exakt um eine Viertel-Periodendauer zurückliegend kein Ist-Positionswert ermittelt worden sein, da der Winkel bzw. Zeitpunkt zwischen zwei Messpunkten liegt, so wird der Ist-Positionswert aus wenigstens zwei tatsächlich gemessenen Ist-Positionswerten interpoliert.

Aus Figur 5 wird deutlich, dass sich der Fachmann auch in Bezug auf lediglich eine Linearachse sehr schnell und anschaulich ein Bild bezüglich der Genauigkeit der betreffenden Maschine, insbesondere Werkzeugmaschine, machen kann.

Figur 6 zeigt ein Maschinenteil 1, welches mittels einer Steuerung S und damit verbundenen Antrieben (nicht dargestellt) periodisch um die Rundachse A geschwenkt wird. Die Steuerung S gibt hierfür die entsprechenden Soll-Lagewerte (Soll-Winkellagen) vor. Ein Messaufnehmer MS mit einer Maßverkörperung 5 misst den exakten Winkel (Ist-Lagewert bzw. Ist-Winkellage) des TCP bezüglich einer Winkel-Nulllage, in der Zeichnung veranschaulicht durch die Achse α₀, in Abhängigkeit von der Zeit.

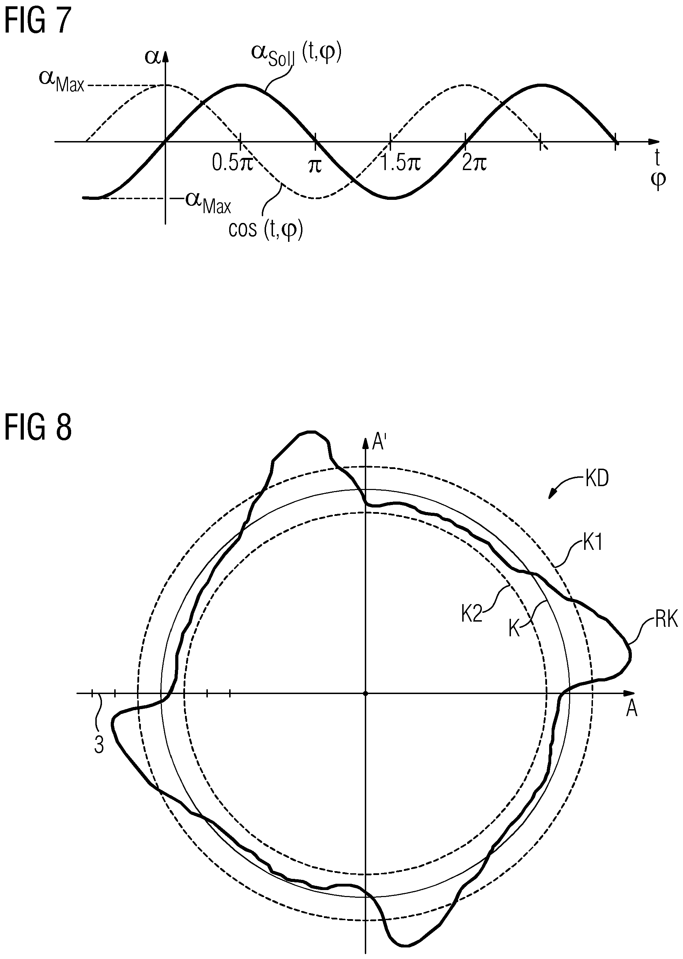

In Figur 7 ist die Vorgabe der Soll-Winkellagen durch die Steuerung S grafisch veranschaulicht. Aufgetragen ist der Winkel α in Abhängigkeit von der Zeit t, bzw. in Abhängigkeit von dem Winkel ϕ, bezogen auf die Periodendauer der Schwenkbewegung (eine Periode entspricht einem Winkel ϕ von 360°). Daraus wird ersichtlich, dass die Soll-Winkellagen α_{Soll} (t, ϕ) gemäß einer Sinus-Funktion vorgegeben werden. Daraus resultiert das periodische Hin- und Herschwenken des Maschinenteils 1 um die Rundachse A zwischen einem maximalen Winkel α_{Max} und einem minimalen Winkel (-α_{Max}) (bezogen auf den Schenkel bzw. die Achse α₀).

Weiterhin dargestellt ist in Figur 7 die Funktion Cosinus (t) bzw. Cosinus (ϕ) (strichlierte Linie), die der Sinus-Funktion um eine Viertel-Periode vorauseilt. Bezüglich der Ausführungsform der Erfindung, bei der sich zu jeder Koordinate in Bezug auf die erste Achse (A -Achse) die zugehörige Koordinate in Bezug auf die zweite, zu der ersten Achse orthogonalen Achse (A'-Achse), dadurch ergibt, dass dafür die gegenüber dem augenblicklich betrachteten Ist-Winkellage um eine Viertel-Periodendauer zuvor ermittelte Ist-Winkellage herangezogen wird, entspricht dies einem Übergang von der Sinus-Funktion auf die Cosinus-Funktion.

Figur 8 veranschaulicht nun das Ergebnis des modifizierten Kreisformtests gemäß der Erfindung für eine Rundachse. Dabei ist die Winkelnulllage (A -Achse) und eine dazu orthogonale Achse (A'-Achse) aufgetragen. Weiterhin ist, wie beim herkömmlichen Kreisformtest, ein idealer Kreis K mit dem Mittelpunkt M im Schnittpunkt der beiden Achsen sowie die beiden Hilfskreise K1 und K2 (strichliert) dargestellt. Darüber hinaus ist auch hier wieder der reale Kreis RK dargestellt, aus dem die Abweichungen der gemessenen Ist-Winkellagen in Bezug auf die vorgegebenen Soll-Winkellagen hervorgehen. Dabei ist zu beachten, dass die Abweichung für den jeweiligen Winkel der Sinus-Funktion in radialer Richtung aufgetragen bzw. dargestellt wird. Ist die Abweichung für einen bestimmten Winkel gleich Null, so liegt der betreffende Punkt auf dem idealen Kreis. Abweichungen ungleich Null haben somit einen Abstand von dem idealen Kreis zur Folge. Bei der Umrechnung einer bestimmten Winkelabweichung in einen entsprechenden Abstand ist ein geeigneter Maßstab zu wählen, so dass die Abweichung grafisch gut erkennbar ist. Dies kann von Maschine zu Maschine bzw. von Achse zu Achse variieren. Ein entsprechender Maßstab ist beispielhaft durch die Maßverkörperung 6 veranschaulicht. Eine Abweichung der Ist-Winkellage αᵢₛₜ(t, ϕ) von der Soll-Winkellage α_{Soll}(t, ϕ) um ein bestimmtes Maß, beispielsweise 1/100 Grad, wird also im Kreisdiagramm durch eine bestimmte Längenänderung in radialer Richtung, beispielsweise 1mm, unter dem betreffenden Winkel ϕ der Sinus-Funktion dargestellt.

Der reale Kreis RK ergibt sich dadurch, dass zu jeder gemäß der Sinus-Funktion vorgegebenen Soll-Winkellage α_{Soll(}t, ϕ) die Ist-Winkellagen αᵢₛₜ(t, ϕ) ermittelt, in eine entsprechende Abweichung in radialer Richtung umgerechnet und unter dem zugehörigen Winkel ϕ aufgetragen wird.

Aus Figur 8 wird deutlich, dass sich der Fachmann auch in Bezug auf lediglich eine zu prüfende Rundachse sehr schnell und anschaulich ein Bild bezüglich der Genauigkeit der betreffenden Maschine, insbesondere Werkzeugmaschine, machen kann.

## Patentansprüche

1. Verfahren zur Überprüfung der Positioniergenauigkeit eines mittels eines Antriebs und einer Steuerung (S) bezüglich wenigstens einer Achse (x; A) verstellbaren Maschinenteils (1), wobei das Maschinenteil (1) lediglich bezüglich der einen Achse (x; A) verstellt wird, indem die Steuerung Soll-Lagewerte des Maschinenteils (1) in Bezug auf die eine Achse (x; A) gemäß einer Sinus-Funktion (x_{Soll} (t, ϕ) ; α_{Soll} (t, ϕ)) vorgibt, wobei eine Messeinrichtung (MS, 4; MS, 5) Ist-Lagewerte des Maschinenteils (1) in Bezug auf die eine Achse (x; A) ermittelt, wobei die Ist-Lagewerte des Maschinenteils (1) in Bezug auf die eine Achse (x; A) in einer Kreisdarstellung (KD) grafisch veranschaulicht werden.

2. Verfahren nach Anspruch 1, wobei zur Kreisdarstellung (KD) zu bestimmten Winkeln der Sinus-Funktion (x_{Soll} (t, ϕ) ; α_{Soll} (t, ϕ)) jeweils die Abweichung des Ist-Lagewertes von dem zugehörigen Soll-Lagewert aufgetragen wird.

3. Verfahren nach Anspruch 1, wobei die Ist-Lagewerte für wenigstens eineinviertel Perioden der Sinus-Funktion (x_{Soll}(t, ϕ) ; α_{Soll} (t, ϕ)) ermittelt und gespeichert werden und die Kreisdarstellung (KD) ein Koordinatensystem mit einer ersten Achse (x; A) und einer dazu orthogonalen zweiten Achse (x'; A') umfasst und die Ist-Lagewerte dadurch grafisch veranschaulicht werden, dass die ermittelten Ist-Lagewerte Werte von Koordinaten in Bezug auf die erste Achse (x; A) darstellen und sich zu jeder Koordinate in Bezug auf die erste Achse (x; A) die zugehörige Koordinate in Bezug auf die zweite Achse (x'; A') dadurch ergibt, dass dafür der gegenüber dem augenblicklich betrachteten Ist-Lagewert um eine Viertel-Periodendauer zurückliegende Ist-Lagewert herangezogen wird.

4. Verfahren nach Anspruch 3, wobei der um eine Viertel-Periodendauer zurückliegende Ist-Lagewert aus wenigstens zwei ermittelten Ist-Lagewerten interpoliert wird.

5. Verfahren nach einem der Ansprüche 1 bis 4, wobei die Ist-Lagewerte für wenigstens eine komplette Periode der Sinus-Funktion (x_{Soll} (t, ϕ) ; α_{Soll} (t, ϕ)) in der Kreisdarstellung (KD) grafisch veranschaulicht werden.

6. Verfahren nach einem der Ansprüche 1 bis 5, wobei das Maschinenteil (1) entlang einer Linearachse (x) gemäß der Sinus-Funktion (x_{Soll} (t, ϕ)) verstellt, insbesondere periodisch hin- und herbewegt wird.

7. Verfahren nach einem der Ansprüche 1 bis 5, wobei das Maschinenteil (1) um eine Rundachse (A) gemäß der Sinus-Funktion (α_{Soll} (t, ϕ)) verstellt, insbesondere periodisch hin- und hergeschwenkt wird.

## Claims

1. Method for checking the positioning accuracy of a machine part (1) that is displaceable with respect to at least one axis (x; A) by means of a drive and a controller (S), wherein the machine part (1) is displaced only with respect to said one axis (x; A) in that the controller specifies nominal position values of the machine part (1) in relation to said one axis (x; A) in accordance with a sine function (xₙₒₘᵢₙₐₗ (t, ϕ); αₙₒₘᵢₙₐₗ (t, ϕ)), wherein a measuring device (MS, 4; MS, 5) determines actual position values of the machine part (1) in relation to said one axis (x; A), wherein the actual position values of the machine part (1) in relation to said one axis (x; A) are visualized graphically in a circular representation (KD) .

2. Method according to claim 1, wherein for the purposes of the circular representation (KD) the deviation of the actual position value from the associated nominal position value is plotted in each case at specific angles of the sine function (xₙₒₘᵢₙₐₗ (t, ϕ); αₙₒₘᵢₙₐₗ (t, ϕ)).

3. Method according to claim 1, wherein the actual position values are determined for at least one and a quarter periods of the sine function (xₙₒₘᵢₙₐₗ (t, ϕ); αₙₒₘᵢₙₐₗ (t, ϕ)) and stored and wherein the circular representation (KD) comprises a coordinate system having a first axis (x; A) and a second axis (x'; A') orthogonal thereto and the actual position values are visualized graphically in that the determined actual position values represent values of coordinates in relation to the first axis (x; A) and, for each coordinate in relation to the first axis (x; A), the associated coordinate in relation to the second axis (x'; A') is obtained in that for that purpose reference is made to the actual position value trailing by one quarter period duration with respect to the actual position value currently under consideration.

4. Method according to claim 3, wherein the actual position value trailing by one quarter period duration is interpolated from at least two determined actual position values.

5. Method according to one of claims 1 to 4, wherein the actual position values for at least one complete period of the sine function (xₙₒₘᵢₙₐₗ (t, ϕ); αₙₒₘᵢₙₐₗ (t, ϕ)) are visualized graphically in the circular representation (KD).

6. Method according to one of claims 1 to 5, wherein the machine part (1) is displaced, in particular moved periodically back and forth, along a linear axis (x) in accordance with the sine function (xₙₒₘᵢₙₐₗ (t, ϕ)).

7. Method according to one of claims 1 to 5, wherein the machine part (1) is displaced, in particular pivoted periodically back and forth, about a rotary axis (A) in accordance with the sine function (αₙₒₘᵢₙₐₗ (t, ϕ)).

## Revendications

1. Procédé de contrôle de la précision de positionnement d'une partie (1) de machine réglable par rapport à au moins un axe (x; A) au moyen d'un entraînement et d'une commande (S), dans lequel on règle la partie (1) de machine seulement par rapport au un axe (x; A) par le fait que la commande prescrit des valeurs de position de consigne de la partie (1) de la machine par rapport au un axe (x; A) suivant une fonction sinus (x_{Soll}(t, ϕ) ; α_{Soll} (t, ϕ)), un dispositif (MS, 4; MS, 5) de mesure déterminant les valeurs de position réelle de la partie (1) de la machine par rapport au un axe (x; A), les valeurs de position réelle de la partie (1) de la machine par rapport au un axe (x; A) étant représentées graphiquement dans une représentation (KD) circulaire.

2. Procédé suivant la revendication 1, dans lequel, pour la représentation (KD) circulaire, on porte à des angles déterminés de la fonction sinus (x_{Soll}(t, ϕ) ; α_{Soll}(t, ϕ)), respectivement l'écart de la valeur de position réelle à la valeur de position de consigne associée.

3. Procédé suivant la revendication 1, dans lequel on détermine et on mémorise les valeurs de position réelle pendant au moins une durée d'une période un quart de la fonction (x_{Soll}(t, ϕ) ; α_{Soll}(t, ϕ)) sinus et la représentation KD circulaire comprend un système de coordonnées ayant un premier axe (x; A) et un deuxième axe (x'; A'), qui lui est perpendiculaire, et les valeurs de position réelle sont représentées graphiquement par le fait que les valeurs de position réelle déterminées représentent des valeurs de coordonnées par rapport au premier axe (x; A) et que, pour chaque coordonnée par rapport au premier axe (x; A), les coordonnées associées par rapport au deuxième axe (x'; A') sont obtenues par le fait que l'on tire parti pour cela d'une valeur de position réelle en arrière d'un quart de période par rapport à la valeur de position réelle considérée instantanément.

4. Procédé suivant la revendication 1, **caractérisé en ce que** l'on interpole, à partir d'au moins deux valeurs de position réelle déterminées, la valeur de position réelle en arrière d'un quart de période.

5. Procédé suivant l'une des revendications 1 à 4, dans lequel on représente graphiquement, dans la représentation (KD) circulaire, les valeurs de position réelle pendant au moins une période complète de la fonction (x_{Soll}(t, ϕ) ; α_{Soll}(t, ϕ)) sinus.

6. Procédé suivant l'une des revendications 1 à 5, dans lequel on règle la partie (1) de machine le long d'un axe (x) linéaire suivant la fonction (x_{Soll}(t, ϕ)) sinus, notamment en la faisant aller et venir périodiquement.

7. Procédé suivant l'une des revendications 1 à 5, dans lequel on règle la partie (1) de machine autour d'un axe (A) circulaire suivant la fonction (α_{Soll}(t, ϕ)) sinus, notamment en la faisant aller et venir périodiquement.
